# EUROPÄISCHE PATENTSCHRIFT

(11) **EP 0 972 683 B1**
(45) Veröffentlichungstag und Bekanntmachung des Hinweises auf die Patenterteilung: **02.01.2003**
(21) Anmeldenummer: 99113733.2
(22) Anmeldetag: 13.07.1999
(51) Int. Cl.: B60R 21/16

(54) **Verfahren und Vorrichtung zum Falten eines aufblasbaren Luftsacks**
Method and means of folding an inflatable air bag
Procédé et dispositif pour le pliage d'un sac de sécurité gonflable

(30) Priorität: 14.07.1998 DE 19831613
(43) Veröffentlichungstag der Anmeldung: 19.01.2000
(60) Teilanmeldung: 01127584.9
(73) Patentinhaber: Delphi Technologies, Inc., Troy, MI 48007 (US)
(72) Erfinder: Kleeberger, Peter, 81543 München (DE); Strasser, Christian, 85622 Feldkirchen (DE); Shaw, William T., 45458 Dayton, Ohio (US)
(74) Vertreter: Manitz, Finsterwald & Partner GbR

(56) Entgegenhaltungen:
- EP-A- 0 825 072
- WO-A-97/12782
- DE-A- 19 535 564

## Beschreibung

Die Erfindung betrifft ein Verfahren sowie eine Vorrichtung zum Falten eines aufblasbaren Luftsacks für Kraftfahrzeuge.

Derartige Verfahren und Vorrichtungen dienen dazu, einen aufblasbaren Luftsack auf eine Größe zusammenzufalten, die es gestattet, den gefalteten Luftsack als Teil eines Luftsackmoduls beispielsweise als Fahrer-, Beifahrer- oder Seitenairbag an einem Fahrzeug zu montieren. Hierbei muß der Luftsack so gefaltet werden, daß er sich beim Aufblasen in einem Crashfall so schnell wie möglich und ohne Beschädigungen der Luftsackhülle entfalten kann.

Aus der DE 195 36 625 A1 ist es bekannt, einen Luftsack ringförmig zu falten, wobei das offene und das geschlossene Ende des Luftsacks bereits zu Beginn des Faltvorgangs zusammengeführt werden.

Aus der DE 195 35 564 A1 ist es bekannt, einen auf einer horizontalen Fläche ausgebreiteten Luftsack innerhalb eines festgelegten Höhenprofils auf ein Zentrum hin zusammenzuraffen.

Aus der EP 0 825 072 A1 sind Faltverfahren und vorrichtungen gemäß dem Oberbegriff des Anspruchs 1 bzw. des Anspruchs 11 bekannt, bei denen der Luftsack regelmäßig zusammengefaltet wird und diese regelmäßige Luftsackfaltung fast ausschließlich außerhalb einer Hohlform stattfindet.

Die WO 98/22311 beschreibt die Falteng eines Luftsacks, die in der Weise erfolgt, daß der Luftsack in ein Gehäuse eingeschoben und am Gehäuse befestigt wird, bevor er nach Beaufschlagung des Luftsackinneren mit Druckluft in Richtung des Befestigungsbereiches komprimiert wird.

Es ist das der Erfindung zugrundeliegende Problem (Aufgabe), ein Verfahren sowie eine Vorrichtung zum Falten eines aufblasbaren Luftsacks zu schaffen, mit denen ein Luftsack möglichst einfach und schnell derart zusammenfaltbar ist, daß er sich im Crashfall optimal entfalten kann.

Die Lösung dieser Aufgabe erfolgt durch die Merkmale des das Faltverfahren betreffenden Anspruchs 1.

Durch das Einschieben des Stempels in den Luftsack ist dann, wenn der Träger und der Stempel in die Hülse eingebracht sind, zwischen der Innenwand der Hülse und dem Stempel ein als Faltraum oder Faltkanal dienender Ringraum vorhanden, in welchem die Luftsackhülle in einer Richtung parallel zum Stempel auf die gewünschte Höhe zusammengedrückt wird. Die dadurch entstehende ringförmige Faltung des Luftsacks ermöglicht ein radiales Entfalten der Luftsackhülle.

Erfindungsgemäß muß die Faltung des Luftsacks nicht innerhalb eines Raumes mit vorgegebener Höhe stattfinden. Außerdem wird der Luftsack bzw. die Luftsackhülle nicht zwangsläufig in einer definierten und vorhersagbaren Weise zusammengelegt, sondern zusammengedrückt oder zusammengeknüllt, so daß eine zwar ringförmige, ansonsten aber willkürliche oder "chaotische", auch als Scrunch Fold bezeichnete Faltung entsteht, die dennoch ein schnelles und optimales Entfalten des Luftsacks in radialer Richtung ermöglicht. Die Erfindung ermöglicht es, beim Zusammendrücken des Luftsacks eine hinterschnittarme Faltung zu erzielen, die ein radiales Entfalten des Luftsacks ermöglicht, wodurch das Verletzungsrisiko für die Fahrzeuginsassen minimiert wird. Des weiteren muß durch das Vorsehen des Stempels beim Zusammendrücken des Luftsacks der Gasgenerator nicht mit einbezogen werden.

Obwohl mit der Erfindung grundsätzlich für beliebige Anwendungszwecke geeignete Luftsäcke gefaltet werden können, wird die Erfindung bevorzugt in Verbindung mit Fahrerairbags eingesetzt.

Gemäß einer bevorzugten Ausführungsform der Erfindung wird der Luftsack in eine Abdeckung eines Luftsackmoduls gedrückt, wobei bevorzugt die Abdeckung ein Bodenelement und einen mit dem Bodenelement verbundenen Wandabschnitt umfaßt.

Die Herstellung eines montagefertigen Luftsackmoduls wird auf diese Weise erheblich beschleunigt, da sich nach Abschluß des Faltvorgangs der zusammengedrückte Luftsack bereits in seinem durch die z.B. in Form einer Abdeckkappe vorgesehene Abdeckung gebildeten Gehäuse befindet, in welchem er am Fahrzeug montiert wird. Dadurch, daß der Luftsack in einem einzigen Arbeitsschritt direkt in die Abdeckung gefaltet werden kann, ist der gesamte Prozeß wesentlich schneller, mechanisch einfacher und folglich erheblich wirtschaftlicher. Wenn der Luftsack zu Beginn des Faltvorgangs an einer Basisplatte vormontiert ist, dann kann der Luftsack somit durch die Basisplatte direkt in die Abdeckung derart gefaltet werden, daß die Basisplatte anschließend mit der Abdeckung verbunden ist und somit das Luftsackmodul mit Ausnahme eines Gasgenerators einbaufertig vorliegt.

Gemäß einem weiteren bevorzugten Ausführungsbeispiel der Erfindung wird der Luftsack vor dem Einbringen des Trägers in die Hülse um den Stempel herum bevorzugt manuell zusammengedrückt.

Dadurch ist gewährleistet, daß der Luftsack nicht zwischen dem Träger und einem eine Einführöffnung der Hülse begrenzenden Randbereich eingeklemmt wird, wenn der Träger in die Hülse eingeführt wird. Das Zusammendrücken erfolgt bevorzugt manuell, kann aber auch z.B. mittels um den Stempel herum verteilt angeordneter Schiebelemente automatisiert werden.

Nach einer weiteren bevorzugten Ausführungsform der Erfindung wird vor dem Einführen des Trägers in die Hülse der Luftsack bevorzugt manuell in die Hülse gestopft und/oder in die Hülse nach unten fallengelassen.

In der bevorzugten Variante erfolgt das Einstopfen des Luftsacks in den Faltraum oder Faltkanal um den Stempel herum manuell. Durch diese denkbar einfache Vorgehensweise kann eine optimal "chaotische", d.h. unregelmäßige und hinterschnittarme Faltung erzielt werden, die eine vorteilhafte radiale Entfaltung ermöglicht und insbesondere - trotz der manuellen Vorgehensweise - zu reproduzierbaren Faltungen bzw. reproduzierbaren radialen Entfaltungen führt.

Es ist möglich, daß vor dem Zusammendrücken des Luftsacks auf die endgültige Packungsgröße der Luftsack ringförmig um den Stempel herum vom Träger herabhängt, so daß er sich bereits allein aufgrund seines eigenen Gewichts zunächst entfalten und dann insbesondere hinterschnittfrei oder zumindest hinterschnittarm auf die gewünschte Höhe zusammengedrückt werden kann.

Gemäß einer bevorzugten Ausführungsform der Erfindung wird der Stempel gegen das geschlossene Ende des Luftsacks vorgeschoben, bis ein oder mehrere im Inneren des Luftsacks angeordnete, bevorzugt bandartige Verbindungselemente, welche das geschlossene Ende des Luftsacks mit dem offenen Ende des Luftsacks oder mit dem Träger verbinden, gespannt sind.

Hierdurch wird das geschlossene Ende des Luftsacks während des Faltvorgangs auf einer durch den Stempel definierten Faltachse festgehalten, so daß es ein Zentrum definiert, um welches die Luftsackhülle ringförmig in Falten gelegt wird. Die Gefahr, daß das geschlossene Ende des Luftsacks in eine Position seitlich versetzt zur Faltachse und damit in den Bereich der ringförmig gefalteten Luftsackhülle gerät, was zu einem undefinierten, nicht mehr radialen Entfalten des Luftsacks führen würde, wird auf diese Weise vermieden.

Gemäß einem weiteren bevorzugten Ausführungsbeispiel der Erfindung wird vor dem Zusammendrücken des Luftsacks auf seine endgültige Pakkungsgröße der Stempel in eine Endstellung in der Nähe eines Bodenelements und bevorzugt derart nahe an das Bodenelement heran bewegt, daß ein Bereich des geschlossenen Endes des Luftsacks gegen das Bodenelement gedrückt wird.

Hierdurch ist sichergestellt, daß sich lediglich eine einzige Lage der Luftsackhülle zwischen dem Bodenelement und dem Gasgenerator befindet, der nach Abschluß des Faltvorgangs in den durch den Stempel freigehaltenen Raum eingesetzt wird.

Die Lösung des der Erfindung zugrundeliegenden Problems (Aufgabe) erfolgt außerdem durch die Merkmale des die Faltvorrichtung betreffenden Anspruchs 11.

Durch die Erfindung wird eine einfach aufgebaute und variabel einsetzbare Faltvorrichtung geschaffen, welche einen Raum mit veränderlicher Höhe bereitstellt und mit welcher der Luftsack bzw. die Luftsackhülle auf eine beliebige Höhe zusammengedrückt werden kann, ohne daß dabei der Gasgenerator mit einbezogen werden muß.

Gemäß einer bevorzugten Ausführungsform der Erfindung ist ein Trägerelement des Trägers lösbar mit einer bevorzugt eine Basisplatte und/oder ein vorzugsweise ringförmiges Halteelement umfassenden Baugruppe eines Luftsackmoduls verbunden, wobei bevorzugt die Basisplatte hinsichtlich Form und Größe der freien inneren Querschnittsfläche der Hülse entspricht.

Der Träger zur Befestigung des zu faltenden Luftsacks wird hierbei durch die Basisplatte, das Halteelement und das Trägerelement gebildet, so daß dann, wenn nach Abschluß des Faltvorgangs die Verbindung zwischen dem Trägerelement und der Basisplatte bzw. dem Halteelement gelöst wird, eine wesentliche Baugruppe des Luftsackmoduls fertiggestellt ist.

Weitere vorteilhafte Ausführungsformen der Erfindung betreffend sowohl das Faltverfahren als auch die Faltvorrichtung sind in den Unteransprüchen, der Beschreibung und der Zeichnung angegeben.

Die Erfindung wird im folgenden beispielhaft anhand der Zeichnung beschrieben. Es zeigen:
- Fig. 1a - 1f: eine Seitenansicht einer Ausführungsform einer erfindungsgemäßen Faltvorrichtung in verschiedenen Phasen eines erfindungsgemäßen Faltverfahrens, und
- Fig. 2a - 2d: eine Seitenansicht einer weiteren Ausführungsform einer erfindungsgemäßen Faltvorrichtung in verschiedenen Phasen eines weiteren erfindungsgemäßen Faltverfahrens.

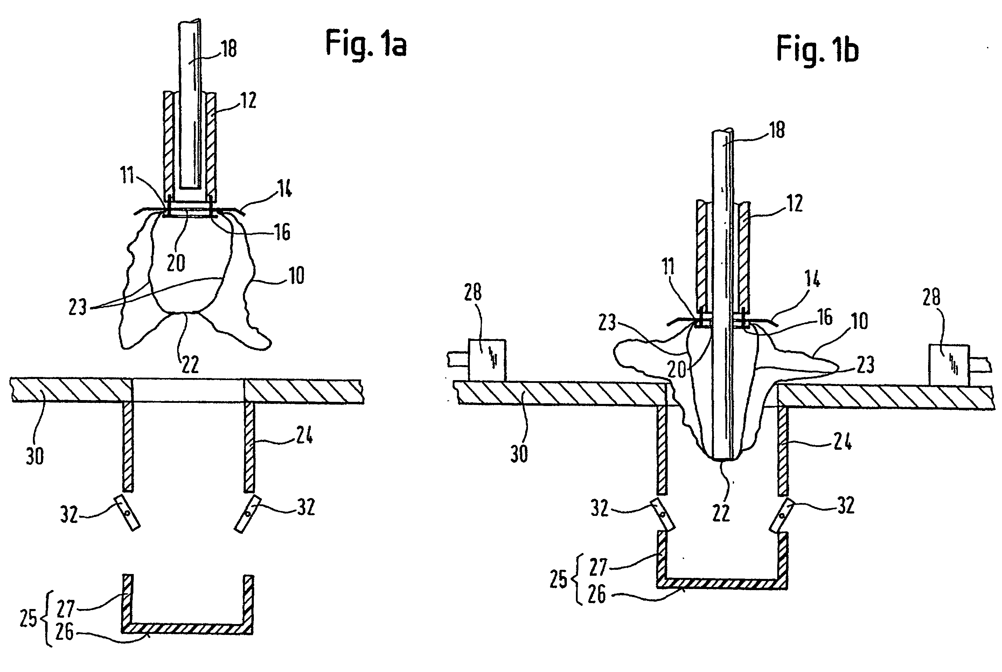

In den Fig. 1a bis 1f ist eine Ausführungsform einer erfindungsgemäßen Faltvorrichtung dargestellt, die zur Durchführung eines erfindungsgemäßen Faltverfahrens vorgesehen ist.

Die in den Fig. 1a bis 1f dargestellte Faltvorrichtung umfaßt gemäß Fig. 1a eine horizontal verlaufende Arbeitsplatte 30, in der eine Aussparung vorgesehen ist. Unterhalb der Arbeitsplatte 30 ist eine Hülse 24 angeordnet, deren Innenwand bündig mit dem die Aussparung der Arbeitsplatte 30 begrenzenden Randbereich abschließt und deren Querschnittsfläche derjenigen des seine endgültige Packungsgröße aufweisenden Luftsacks 10 entspricht.

Unterhalb der Hülse 24 ist eine Abdeckung 25 in Form einer Abdeckkappe eines Luftsackmoduls angeordnet, die ein Bodenelement 26 und einen einstückig mit dem Bodenelement 26 verbundenen Wandabschnitt 27 umfaßt, der parallel zur Hülsenwand verläuft. Die freie innere Querschnittsfläche der Abdeckung 25 entspricht derjenigen der Hülse 24.

Zwischen der Hülse 24 und der Abdeckung 25 sind Biegeelemente 32 vorgesehen, die quaderförmig ausgebildet und drehbar gelagert sind. Der Zweck der Biegeelemente 32 wird nachstehend bei der Erläuterung des erfindungsgemäßen Faltverfahrens beschrieben.

Oberhalb der Arbeitsplatte 30 ist ein Trägerelement 12 angeordnet, das an seiner Unterseite eine Basisplatte 14 sowie ein ringförmiges, im folgenden als Haltering bezeichnetes Halteelement 16 eines Luftsackmoduls trägt. Zusammen mit der Basisplatte 14 und dem Haltering 16 bildet das Trägerelement 12 einen Träger, an dem ein zu faltender Luftsack 10 mit seinem offenen Ende 11, das auch als Mundstück des Luftsacks 10 bezeichnet wird, befestigt ist.

Der Luftsack 10 ist mit seinem das Mundstück begrenzenden Bereich der Luftsackhülle um eine kreisförmige Öffnung 20 herum angeordnet, die in der Basisplatte 14 und im Haltering 16 ausgebildet ist.

Die Querschnittsfläche der Basisplatte 14 ist derart bemessen, daß die Basisplatte 14 paßgenau in die Hülse 24 und die Abdeckung 25 eingeführt werden kann.

Ein zylindrischer Stempel 18 ist relativ zum Träger in vertikaler Richtung bewegbar und durch das röhrenförmig ausgebildete Trägerelement 12 und die in der Basisplatte 14 und dem Haltering 16 vorgesehene Öffnung 20 hindurch in den Luftsack 10 hinein verschiebbar.

Der Durchmesser des Stempels 18 und der Durchmesser der Öffnung 20 entsprechen zumindest im wesentlichen dem Durchmesser eines im montagefertigen Luftsackmodul vorgesehenen, nicht dargestellten Gasgenerators.

Das geschlossene Ende 22 des zu faltenden Luftsacks 10 ist über mehrere, bevorzugt zwei oder vier bandartige Verbindungselemente 23 entweder mit dem das Mundstück des Luftsacks 10 bildenden Bereich der Luftsackhülle oder mit der Basisplatte 14 bzw. dem Haltering 16 derart verbunden, daß das geschlossene Ende 22 bzw. ein Bereich des geschlossenen Endes 22 des Luftsacks 10 unterhalb der Öffnung 20, d. h. auf einer durch die Längsachse des Stempels 18 definierten Faltachse angeordnet ist.

Die Länge der Verbindungselemente 23 ist derart gewählt, daß die Luftsackhülle 10 um ihr geschlossenes Ende 22 herum bis unterhalb des durch das geschlossene Ende 22 definierten Höhenniveaus herabhängen kann.

Ein erfindungsgemäßes Faltverfahren, das mit der vorstehend erläuterten Faltvorrichtung durchführbar ist, wird im folgenden anhand der Fig. 1a - 1f beschrieben.

Der zu faltende Luftsack 10 wird zunächst in der vorstehend beschriebenen Art und Weise an der Basisplatte 14 bzw. am Haltering 16 mit seinem offenen Ende 11 befestigt, so daß die Luftsackhülle gemäß Fig. 1a von der Basisplatte 14 bzw. dem Haltering 16 herabhängt. Zu Beginn des Faltverfahrens ist der Luftsack 10 folglich mit der Basisplatte 14 verbunden.

Anschließend wird der Stempel 18 in den Luftsack 10 hinein und gegen das geschlossene Ende 22 geschoben, bis die Verbindungselemente 23 gespannt sind, wie es in Fig. 1b dargestellt ist. Vor, nach oder mit der Vorschubbewegung des Stempels 18 in den Luftsack 10 hinein wird das Trägerelement 12 abgesenkt.

Die Luftsackhülle 10 kann vor dem Einführen der Basisplatte 14 in die Hülse 24 um den Stempel 18 herum durch Schiebeelemente 28 zusammengedrückt werden. In einer bevorzugten Variante erfolgt das Zusammendrücken der Luftsackhülle 10 in Richtung des Stempels jedoch von Hand. Auf diese Weise werden Bereiche der herabhängenden Luftsackhülle 10, die gemäß Fig. 1b über den Umfang der Basisplatte 14 hinaus nach außen vorstehen, unter die Basisplatte 14 geschoben.

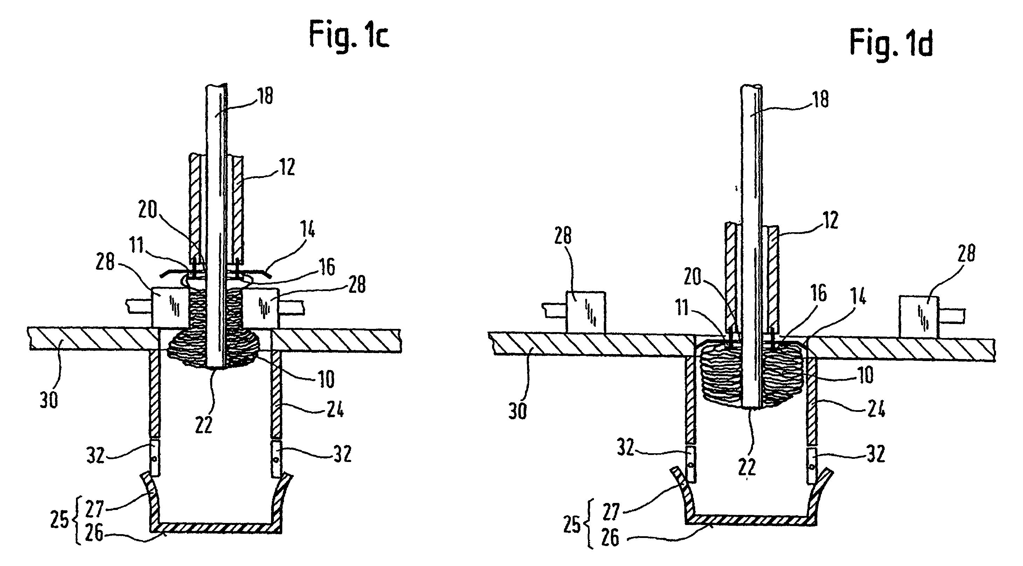

Die Schiebeelemente 28 sind um die durch die Stempel-Längsachse definierte Faltachse herum verteilt angeordnet und in der durch die Arbeitsplatte 30 definierten Ebene bewegbar. Fig. 1c zeigt, daß die Schiebeelemente 28 die Luftsaekhülle 10 derart in Richtung des Stempels 18 drükken, daß die gesamte Luftsackhülle 10 unter die Basisplatte 14 gebracht wird. In der bevorzugten manuellen Variante wird die Luftsackhülle 10 von Hand in den in Fig. 1b bzw. Fig. 1c dargestellten zusammengedrückten Zustand gebracht.

Gegebenenfalls kann die Luftsackhülle 10 vor dem manuellen oder durch die Schiebeelemente 28 erfolgenden Zusammendrücken auf der Arbeitsplatte 30 ausgebreitet werden.

In Fig. 1b ragt der Stempel 18 weiter in die Hülse 24 hinein als in Fig. 1c. Grundsätzlich kann der Stempel 18 jedoch vor und während des Zusammendrückens der Luftsackhülle 10 auch weniger weit oder noch weiter als jeweils dargestellt in die Hülse hineinragen.

Nach dem Zusammendrücken der Luftsackhülle 10 werden die Schiebeelemente 28 zurückgefahren, und das Trägerelement 12 wird weiter abgesenkt, wie es in Fig. 1d dargestellt ist.

Bevor das Trägerelement 12 weiter abgesenkt wird, wird bevorzugt die Luftsackhülle 10 auch in die Hülse 24 gestopft, wobei dies vorzugsweise ebenfalls manuell erfolgt. Die Luftsackhülle 10 wird hierbei also nicht nur von Hand horizontal in Richtung des Stempels 18, sondern außerdem auch vertikal nach unten in das Innere der Hülse 24 gedrückt.

Die an der Hülse 24 angebrachten Biegeelemente 32 werden gemäß Fig. 1c bereits während des Zusammendrückens der Luftsackhülle 10 in eine Einführstellung gebracht, in der sie mit einer inneren Längsseite eine Verlängerung der Hülseninnenwand bilden und mit einer Außenseite einen elastisch verformbar ausgebildeten Bereich des Wandabschnitts 27 der Abdeckung 25 nach außen biegen. Auf diese Weise wird die Einführöffnung der Abdeckung 25 aufgeweitet.

Bei weitergehender Abwärtsbewegung des Trägerelementes 12 und des Stempels 18 gelangt das vordere Ende des Stempels 18 unter Zwischenlage des geschlossenen Endes 22 des Luftsacks 10 in Anschlag mit dem Bodenelement 26 der Abdeckung 25.

In dem Zeitraum zwischen dem Vorschieben des Stempels 18 in den Luftsack 10 hinein bis zum Anschlag des Stempels 18 an das Bodenelement 26 erfolgt zwischen dem Stempel 18 und dem Trägerelement 12 bevorzugt keine oder nur eine geringfügige Relativbewegung, d.h. der Abstand zwischen dem offenen Ende 11 und dem geschlossenen Ende 22 des Luftsacks 10 bleibt in dieser Zeit zumindest im wesentlichen konstant.

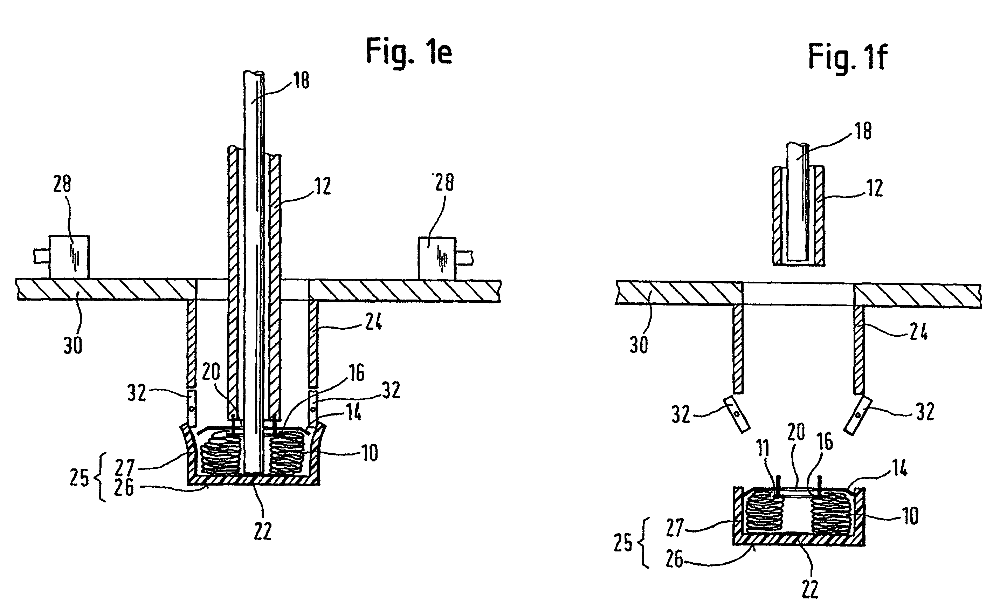

Nachdem der Stempel 18 an das Bodenelement 26 der Abdeckung 25 gestoßen ist, wird das Trägerelement 12 weiter abgesenkt und auf das Bodenelement 26 zu bewegt. Hierbei wird die ringförmig um den Stempel 18 herum angeordnete Luftsackhülle 10 zusammengedrückt, d. h. in die Abdeckung 25 hinein gedrückt, bis die Basisplatte 14 und der Haltering 16 gemäß Fig. 1e sich innerhalb der Abdeckung 25 befinden und die gewünschte Packungshöhe erreicht ist.

Anschließend wird gemäß Fig. 1f die Verbindung zwischen dem Trägerelement 12 und der Basisplatte 14 bzw. dem Haltering 16 gelöst, und das Trägerelement 12 und der Stempel 18 werden nach oben zurückgefahren. Außerdem wird die Abdeckung 25 abgesenkt, so daß der elastisch verformbare Wandabschnitt 27 zurückfedert, mit dem Umfangsbereich der Basisplatte 14 in Eingriff gelangt und auf diese Weise die Basisplatte 14, den Haltering 16 und den zusammengedrückten Luftsack 10 festhält.

Der auf seine endgültige Packungsgröße zusammengedrückte Luftsack 10 gemäß Fig. 1f befindet sich montagefertig innerhalb seiner das Gehäuse des Luftsackmoduls bildenden Abdeckung 25, wobei der Luftsack 10 ringförmig um einen nach dem Herausziehen des Stempels 18 verbleibenden zentralen freien Raum herum zusammengedrückt ist, in den ein nicht dargestellter Gasgenerator des Luftsackmoduls eingesetzt werden kann. Der Stempel 18 ist derart bemessen, daß der Freiraum im Luftsackmodul die für den Gasgenerator erforderlichen Abmessungen aufweist.

Durch die Erfindung wird ein schnell und einfach durchführbares Verfahren zum Falten eines Luftsacks geschaffen, bei dem einerseits dafür gesorgt wird, daß die Luftsackhülle ringförmig und hinterschnittfrei oder zumindest hinterschnittarm zusammengedrückt wird, um im Crashfall ein radiales Entfalten zu ermöglichen, bei dem andererseits aber innerhalb des Faltraumes keine definierte und vorhersagbare Faltenbildung erfolgt, sondern gemäß einem "chaotischen" Faltverfahren der genaue Verlauf der Luftsackhülle 10 dem Zufall überlassen wird, wie es durch die verschlungenen Linien in den Fig. 1c - 1f angedeutet ist.

Der Stempel 18 der erfindungsgemäßen Faltvorrichtung erfüllt mehrere Funktionen, indem er als Dummy für einen später in das Luftsackmodul einzusetzenden Gasgenerator dient, indem er sicherstellt, daß die Luftsackhülle 10 im montagefertigen Luftsackmodul ringförmig um den Gasgenerator herum zusammengedrückt wird, und indem er gewährleistet, daß sich im montagefertigen Luftsackmodul nur eine einzige Lage der Luftsackhülle 10 zwischen dem Gasgenerator und dem Bodenelement 26 der Abdeckung 25 befindet.

Sofern nichts Gegenteiliges erwähnt wird, entsprechen die im folgenden beschriebenen Ausführungsformen einer erfindungsgemäßen Faltvorrichtung bzw. eines erfindungsgemäßen Faltverfahrens hinsichtlich des Aufbaus, der Funktionsweise sowie der vorteilhaften Wirkungen der vorstehend anhand der Fig. 1a - 1f beschriebenen Ausführungsform.

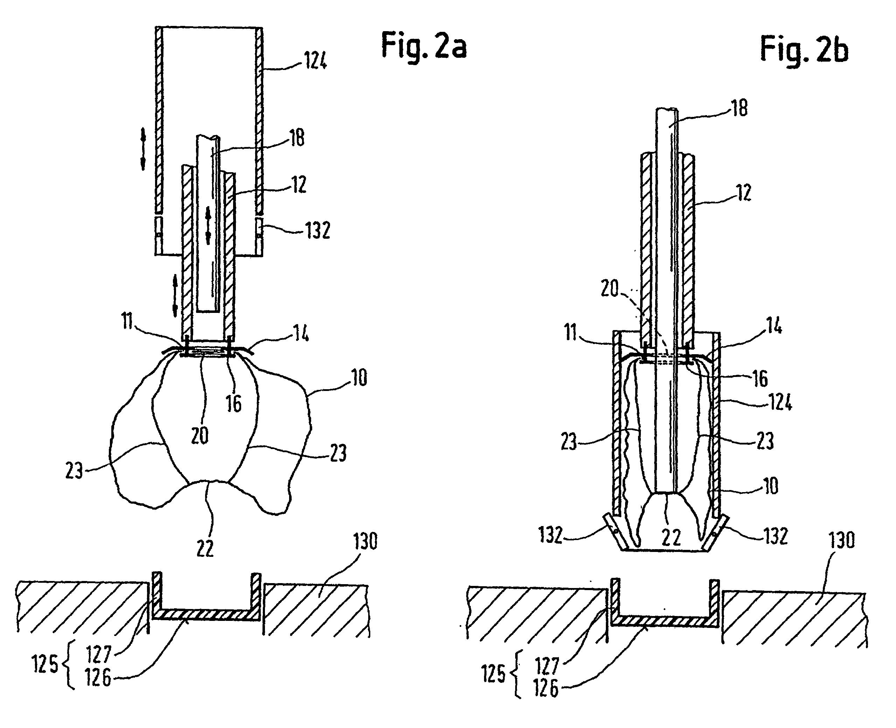

Abweichend von der vorstehend beschriebenen Ausführungsform ist gemäß Fig. 2a die Abdeckung 125 feststehend in einer in der Arbeitsplatte 130 ausgebildeten Aussparung angeordnet. Die Hülse 124, das Trägerelement 12 und der Stempel 18 sind relativ zur Abdeckung 125 sowie relativ zueinander in vertikaler Richtung bewegbar, wie es durch die Doppelpfeile angedeutet ist.

Nach dem Befestigen des Luftsacks 10 an der Basisplatte 14 bzw. dem Haltering 16 und dem Einschieben des Stempels 18 in den Luftsack 10 wird - ohne Zusammendrücken der Luftsackhülle um den Stempel 18 herum - die Hülse 124 über das Trägerelement 12, den Stempel 18 und den Luftsack 10 geschoben, so daß sich die in Fig. 2b gezeigte Anordnung ergibt.

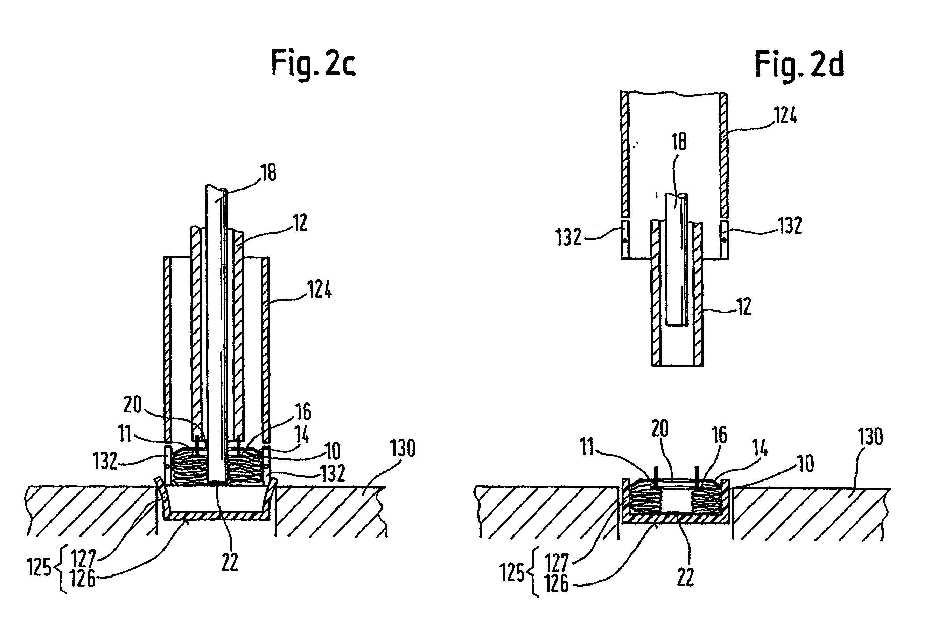

Diese Anordnung wird anschließend in Richtung der Abdeckung 125 abgesenkt, wobei gemäß Fig. 2c die jeweils in ihre Einführstellung gebrachten Biegeelemente 132 den elastisch verformbaren Wandabschnitt 127 der Abdeckung 125 aufbiegen.

Entsprechend der Ausführungsform der Fig. 1a - 1f wird der Stempel 18 unter Zwischenlage des geschlossenen Endes 22 des Luftsacks 10 in Anschlag an das Bodenelement 126 der Abdeckung 125 gebracht, bevor das Trägerelement 12 weiter abgesenkt wird, um den Luftsack 10 innerhalb des ringförmigen Faltraumes auf seine endgültige Packungsgröße zusammenzudrücken. In Fig. 2c ist der Stempel 18 in einer noch vom Bodenelement 126 beabstandeten Stellung gezeigt.

Nach dem Zurückziehen der Hülse 124, des von der Basisplatte 14 bzw. dem Haltering 16 gelösten Trägerelementes 12 und des Stempels 18 ist der Luftsack 10 gemäß Fig. 2d in der gewünschten Weise ringförmig zusammengedrückt und - im wesentlichen bis auf die Anbringung eines Gasgenerators - montagefertig in seiner Abdeckung 25 angeordnet.

### Bezugszeichenliste

- 10: Luftsack, Luftsackhülle
- 11: offenes Ende des Luftsacks
- 12: Trägerelement
- 14: Basisplatte
- 16: Haltering
- 18: Stempel
- 20: Öffnung
- 22: geschlossenes Ende des Luftsacks
- 23: Verbindungselemente
- 24, 124: Hülse
- 25, 125: Abdeckung
- 26, 126: Bodenelement
- 27, 127: Wandabschnitt
- 28: Schiebeelemente
- 30, 130: Arbeitsplatte
- 32, 132: Biegeelemente
- 34: Aussparungen

## Patentansprüche

1. Verfahren zum Falten eines aufblasbaren Luftsacks (10) für Kraftfahrzeuge, welches die Schritte umfasst, dass ein zu faltender Luftsack (10) mit seinem offenen Ende (11) an einem Träger (12, 14, 16) befestigt wird, dass ein bevorzugt im wesentlichen zylindrischer Stempel (18) durch eine Öffnung (20) im Träger (12, 14, 16) hindurch in den Luftsack (10) hinein gegen das geschlossene Ende (22) des Luftsacks (10) vorgeschoben wird, und dass der Träger (12, 14, 16) und der Stempel (18) in eine Hülse (24, 124) eingebracht werden, **dadurch gekennzeichnet, dass** zumindest ein Teil (14) des Trägers (12, 14, 16) hinsichtlich Form und Größe der freien inneren Querschnittsfläche der Hülse (24, 124) entspricht, und dass der Luftsack (10) dadurch unregelmäßig zusammengedrückt wird, dass ein von dem Träger (12, 14, 16), dem Stempel (18), der Hülseninnenwand und einem Bodenelement (26, 126) begrenzter Raum verkleinert wird, bis der Luftsack (10) auf seine endgültige Packungsgröße zusammengedrückt ist.

2. Verfahren nach Anspruch 1,
**dadurch gekennzeichnet,**
**daß** der Luftsack (10) in eine Abdeckung (25, 125) eines Luftsackmoduls gedrückt wird, wobei bevorzugt die Abdeckung (25, 125) ein Bodenelement (26, 126) und einen mit dem Bodenelement (26, 126) verbundenen Wandabschnitt (27, 127) umfaßt.

3. Verfahren nach Anspruch 1 oder 2,
**dadurch gekennzeichnet,**
**daß** der Luftsack (10) mit seinem offenen Ende (11) an einer bevorzugt eine Basisplatte (14) und/oder ein vorzugsweise ringförmiges Halteelement (16) umfassenden Baugruppe eines Luftsackmoduls befestigt wird, wobei eine Verbindung zwischen der Baugruppe und einem Trägerelement (12) des Trägers gelöst wird, nachdem der Luftsack (10) auf seine endgültige Packungsgröße zusammengedrückt ist.

4. Verfahren nach zumindest einem der vorhergehenden Ansprüche, dadurch gekennzetchnet,
dass ein bevorzugt elastisch verformbarer Wandabschnitt (27, 127) einer Abdeckung (25, 125) für den zusammengedrückten Luftsack (10) aufgeweitet wird, bevor der Träger (12, 14, 16) in die Abdeckung (25, 125) eingeführt wird.

5. Verfahren nach zumindest einem der vorhergehenden Ansprüche,
**dadurch gekennzeichnet,**
**dass** der Träger (12, 14, 16), insbesondere eine Basisplatte (14) des Trägers (12, 14, 16), im in eine Abdeckung (25, 125) eingeführten Zustand mit der Abdeckung (25, 125) bevorzugt fest verbunden ist.

6. Verfahren nach zumindest einem der vorhergehenden Ansprüche,
**dadurch gekennzeichnet,**
**daß** der Luftsack (10) vor dem Einbringen des Trägers (12, 14, 16) in die Hülse (24) um den Stempel herum bevorzugt manuell zusammengedrückt wird.

7. Verfahren nach zumindest einem der vorhergehenden Ansprüche,
**dadurch gekennzeichnet,**
**daß** vor dem Einführen des Trägers (12, 14, 16) in die Hülse (24) der Luftsack (10) bevorzugt manuell in die Hülse (24) gestopft und/oder in die Hülse (24) nach unten fallengelassen wird.

8. Verfahren nach zumindest einem der vorhergehenden Ansprüche,
**dadurch gekennzeichnet,**
**daß** der Stempel (18) gegen das geschlossene Ende (22) des Luftsacks (10) vorgeschoben wird, bis ein oder mehrere im Inneren des Luftsacks (10) angeordnete, bevorzugt bandartige Verbindungselemente (23), welche das geschlossene Ende (22) des Luftsacks (10) mit dessen offenem Ende (11) oder mit dem Träger (12, 14, 16) verbinden, gespannt sind.

9. Verfahren nach zumindest einem der vorhergehenden Ansprüche,
**dadurch gekennzeichnet,**
**dass** vor dem Zusammendrücken des Luftsacks (10) auf seine endgültige Packungsgröße der Stempel (18) in eine Endstellung in der Nähe eines Bodenelementes (26, 126) und bevorzugt derart nahe an das Bodenelement (26, 126) heran bewegt wird, daß ein Bereich des geschlossenen Endes (22) des Luftsacks (10) gegen das Bodenelement (26, 126) gedrückt wird.

10. Verfahren nach zumindest einem der vorhergehenden Ansprüche,
**dadurch gekennzeichnet,**
**daß** nach dem Einbringen des Trägers (12, 14, 16) und des Stempels (18) in die Hülse (124) zunächst die dadurch gebildete Einheit als Ganzes in Richtung eines feststehend angeordneten Bodenelementes (126) bewegt und anschließend der Träger (12, 14, 16) relativ zur Hülse (124) auf das Bodenelement (126) zu bewegt wird.

11. Vorrichtung zur Durchführung eines Verfahrens zum Falten eines aufblasbaren Luftsacks für Kraftfahrzeuge nach zumindest einem der vorhergehenden Ansprüche, mit einem Träger (12, 14, 16), an dem ein zu faltender Luftsack (10) mit seinem offenen Ende (11) befestigbar ist, einem bevorzugt im wesentlichen zylindrischen Stempel (18), der durch eine im Träger (12, 14, 16) ausgebildete Öffnung (20) in den Luftsack (10) hinein gegen das geschlossene Ende (22) des Luftsacks (10) vorschiebbar ist, und einer Hülse (24, 124), in die der Träger (12, 14, 16) und der Stempel (18) einbringbar sind, **dadurch gekennzeichnet, dass** zumindest ein Teil (14) des Trägers (12, 14, 16) hinsichtlich Form und Größe der freien inneren Querschnittsfläche der Hülse (24, 124) entspricht, und dass zum unregelmäßigen Zusammendrücken des Luftsacks (10) auf seine endgültige Packungsgröße der Träger (12, 14, 16), der Stempel (18), die Hülse (24, 124) und ein Bodenelement (26, 126) relativ zueinander derart bewegbar sind, dass ein von ihnen begrenzter Raum verkleinerbar ist.

12. Vorrichtung nach Anspruch 11,
**dadurch gekennzeichnet,**
**daß** ein Trägerelement (12) des Trägers lösbar mit einer bevorzugt eine Basisplatte (14) und/oder ein vorzugsweise ringförmiges Halteelement (16) umfassenden Baugruppe eines Luftsackmoduls verbunden ist, wobei bevorzugt die Basisplatte (14) hinsichtlich Form und Größe der freien inneren Querschnittsfläche der Hülse (24, 124) entspricht.

13. Vorrichtung nach Anspruch 11 oder 12,
**dadurch gekennzeichnet,**
**daß** unterhalb der Hülse (24, 124) eine Abdeckung (25, 125) für den zusammengedrückten Luftsack (10) angeordnet ist, wobei bevorzugt die Abdeckung (25, 125) ein Bodenelement (26, 126) und einen mit dem Bodenelement (26, 126) verbundenen Wandabschnitt (27, 127) umfasst.

14. Vorrichtung nach zumindest einem der Ansprüche 11 bis 13,
**dadurch gekennzeichnet,**
**dass** bevorzugt an der Hülse (24, 124) angebrachte Biegeelemente (32, 132) zwischen die Hülse (24, 124) und einen bevorzugt elastisch verformbaren Wandabschnitt (27, 127) einer Abdeckung (25, 125) für den zusammengedrückten Luftsack bringbar sind, wobei die Biegeelemente (32, 132) zum Einführen des Trägers (12, 14, 16), insbesondere einer eine Basisplatte (14) und/oder ein vorzugsweise ringförmiges Halteelement (16) umfassenden Baugruppe, in die Abdeckung (25, 125) in eine Einführstellung bringbar sind, in der sie den Wandabschnitt (27, 127) der Abdeckung (25, 125) aufweiten.

15. Vorrichtung nach zumindest einem der Ansprüche 11 bis 14,
**dadurch gekennzeichnet,**
**dass** der Querschnitt des Trägers (12, 14, 16), insbesondere einer Basisplatte (14) eines Luftsackmoduls, hinsichtlich Form und Größe zumindest im wesentlichen der freien inneren Querschnittsfläche der Hülse (24, 124) und/oder einer Abdeckung (25, 125) für den zusammengedrückten Luftsack (10) und bevorzugt demjenigen des endgültig zusammengedrückten Luftsacks (10) entspricht.

16. Vorrichtung nach zumindest einem der Ansprüche 11 bis 15,
**dadurch gekennzeichnet,**
**daß** der Querschnitt des Stempels (18) hinsichtlich Form und Größe zumindest im wesentlichen demjenigen eines Gasgenerators für den Luftsack (10) entspricht.

17. Vorrichtung nach zumindest einem der Ansprüche 11 bis 16,
**dadurch gekennzeichnet,**
**daß** die Hülse (24) und ein bevorzugt unterhalb der Hülse (24) angeordnetes Bodenelement (26) feststehend angeordnet sind, wobei der Träger (12, 14, 16) und der Stempel (18) in die Hülse (24) einführbar und in Richtung des Bodenelementes (26) bewegbar sind.

18. Vorrichtung nach zumindest einem der Ansprüche 11 bis 17,
**dadurch gekennzeichnet,**
**daß** lediglich ein Bodenelement (126) feststehend angeordnet ist, wobei der Träger (12, 14, 16) und der Stempel (18) in die Hülse (124) einführbar und zusammen mit der Hülse (124) in Richtung des Bodenelementes (126) bewegbar sind.

## Claims

1. Method for folding an inflatable air bag (10) for motor vehicles comprising the steps that an air bag (10) to be folded is fastened by its open end (11) to a support (12, 14, 16), that a preferably substantially cylindrical plunger (18) is pushed forward through an opening (20) in the support (12, 14, 16) into the air bag (10) against the closed end (22) of the air bag (10) and that the support (12, 14, 16) and the plunger (18) are introduced into a sleeve (24, 124), **characterised in that** with regard to shape and size at least one part (14) of the support (12, 14, 16) matches the open inner cross-sectional area of the sleeve (24, 124) and that the air bag (10) is compressed irregularly **in that** a space bounded by the support (12, 14, 16), the plunger (18), the inner wall of the sleeve and a base member (26, 126) is diminished until the air bag (10) is compressed to its final packing size.

2. Method according to Claim 1, **characterised in that** the air bag (10) is pressed into a cover (25, 125) of an air bag module, wherein the cover (25, 125) comprises a base member (26, 126) and a wall section (27, 127) connected to the base member (26, 126).

3. Method according to Claim 1 or 2, **characterised in that** the air bag (10) is fastened by its open end (11) to a subassembly of an air bag module preferably comprising a base plate (14) and/or a preferably annular retaining member (16), wherein a connection between the subassembly and a support member (12) of the support is released after the air bag (10) is compressed to its final packing size.

4. Method according to at least one of the preceding claims, **characterised in that** a preferably elastically deformable wall section (27, 127) of a cover (25, 125) is widened for the compressed air bag (10) before the support (12, 14, 16) is introduced into the cover (25, 125).

5. Method according to at least one of the preceding claims, **characterised in that** the support (12, 14, 16), in particular a base plate (14) of the support (12, 14, 16), in the state of insertion into a cover (25, 125) is preferably fixedly connected to the cover (25, 125).

6. Method according to at least one of the preceding claims, **characterised in that** before the introduction of the support (12, 14, 16) into the sleeve (24) the air bag (10) is compressed, preferably manually, around the plunger.

7. Method according to at least one of the preceding claims, **characterised in that** prior to the introduction of the support (12, 14, 16) into the sleeve (24) the air bag (10) is stuffed, preferably manually, into the sleeve and/or is let fall downwards into the sleeve (24).

8. Method according to at least one of the preceding claims,
**characterised in that** the plunger (18) is pushed forward against the closed end (22) of the air bag (10) until one or more preferably ribbon-like connecting members (23) arranged in the interior of the air bag (10), which connect the closed end (22) of the air bag (10) to the open end (11) thereof or to the support (12, 14, 16), are tensioned.

9. Method according to at least one of the preceding claims, **characterised in that** prior to compression of the air bag (10) to its final packing size the plunger (18) is moved into an end position in the vicinity of a base member (26, 126) and preferably so close up to the base member (26, 126) that a region of the closed end (22) of the air bag (10) is pressed against the base member (26, 126).

10. Method according to at least one of the preceding claims, **characterised in that** after introduction of the support (12, 14, 16) and the plunger (18) into the sleeve (124) the unit formed by this means is first of all moved as a whole towards a fixedly arranged base member (126) and then the support (12, 14, 16) is moved relative to the sleeve (124) towards the base member (126).

11. Device for carrying out a method for folding an inflatable air bag for motor vehicles according to at least one of the preceding claims having a support (12, 14, 16) to which an air bag (10) to be folded is fastenable by its open end (11), a preferably substantially cylindrical plunger (18) which is advanceable through an opening (20) constructed in the support (12, 14, 16) into the air bag (10) against the closed end (22) of the air bag (10) and a sleeve (24, 124) into which the support (12, 14, 16) and the plunger (18) are introduceable, **characterised in that** with regard to shape and size at least one part (14) of the support (12, 14, 16) matches the open inner cross-sectional area of the sleeve (24, 124) and that for the irregular compression of the air bag (10) to its final packing size the support (12, 14, 16), the plunger (18), the sleeve (24, 124) and a base member (26, 126) are movable relative to one another in such a way that a space bounded by them can be diminished.

12. Device according to Claim 11, **characterised in that** a support member (12) of the support is detachably connected to subassembly of an air bag module preferably comprising a base plate (14) and/or a preferably annular retaining member (16), wherein with regard to shape and size preferably the base plate (14) matches the open inner cross-sectional area of the sleeve (24, 124).

13. Device according to Claim 11 or 12, **characterised in that** below the sleeve (24, 124) a cover (25, 125) for the compressed air bag (10) is arranged, wherein preferably the cover (25, 125) comprises a base member (26, 126) and a wall section (27, 127) connected to the base member (26, 126).

14. Device according to at least one of Claims 11 to 13, **characterised in that** deflecting members (32, 132) attached preferably to the sleeve (24, 124) can be moved between the sleeve (24, 124) and a preferably elastically deformable wall section (27, 127) of a cover (25, 125) for the compressed air bag, wherein the deflecting members (32, 132) are movable into an introductory position for introducing the support (12, 14, 16), in particular a subassembly comprising a base plate (14) and/or a preferably annular retaining member (16), into the cover (25, 125) in which they widen the wall section (27, 127) of the cover (25, 125).

15. Device according to at least one of Claims 11 to 14, **characterised in that** the cross-section of the support (12, 14, 16), in particular a base plate (14) of an air bag module, matches at least substantially with regard to shape and size the open inner cross-sectional area of the sleeve (24, 124) and/or a cover (25, 125) for the compressed air bag (10) and preferably that of the finally compressed air bag (10).

16. Device according to at least one of Claims 11 to 15, **characterised in that** with regard to shape and size the cross-section of the plunger (18) matches at least substantially that of a gas generator for the air bag (10).

17. Device according to at least one of Claims 11 to 16, **characterised in that** the sleeve (24) and a base member (26) arranged preferably below the sleeve (24) are arranged in fixed manner, wherein the support (12, 14, 16) and the plunger (18) are introduceable into the sleeve (24) and are movable in the direction of the base member (26).

18. Device according to at least one of Claims 11 to 17, **characterised in that** only a base member is arranged in fixed manner, wherein the support (12, 14, 16) and the plunger (18) are introduceable into the sleeve (124) and together with the sleeve (124) are movable in the direction of the base member (126).

## Revendications

1. Procédé de pliage d'un coussin de sécurité gonflable (10) pour véhicules à moteur, qui comprend les étapes suivantes : un coussin de sécurité à plier (10) est fixé par son extrémité ouverte (11) sur un support (12, 14, 16), un piston de préférence sensiblement cylindrique (18) est déplacé e n avant à travers une ouverture (20) du support (12, 14, 16) dans le coussin de sécurité (10) contre l'extrémité fermée (22) du coussin de sécurité (10) et le support (12, 14, 16) et le piston (18) sont insérés dans une douille (24, 124) **caractérisé en ce qu'**au moins une partie (14) du support (12, 14, 16) correspond en forme et dimensions à la surface en coupe transversale interne libre de la douille (24, 124) et **en ce que** le coussin de sécurité (10) est comprimé de manière irrégulière de sorte qu'un espace délimité par le support (12, 14, 16), le piston (18), la paroi interne de la douille et un élément de fond (26, 126) soit réduit jusqu'à ce que le coussin de sécurité (10) soit comprimé à sa dimension de tassement finale.

2. Procédé selon la revendication 1, **caractérisé en ce que** le coussin de sécurité (10) est pressé dans un couvercle (25, 125) d'un module de coussin de sécurité, le couvercle (25, 125) comprenant de préférence un élément de fond (26, 126) et une section de paroi (27, 127) reliée à l'élément de fond (26, 126).

3. Procédé selon la revendication 1 ou 2, **caractérisé en ce que** le coussin de sécurité (10) est fixé par son extrémité ouverte (11) à un bloc d'un module de coussin de sécurité comprenant de préférence une plaque de base (14) et/ou un élément de retenue de préférence annulaire (16), une liaison entre le bloc et un élément porteur (12) du support étant défaite après que le coussin de sécurité (10) a été comprimé à sa dimension de tassement finale.

4. Procédé selon au moins l'une quelconque des revendications précédentes, **caractérisé en ce qu'**une section de paroi (27, 127) de préférence déformable élastiquement d'un couvercle (15, 125) est élargie pour le coussin de sécurité comprimé (10) avant que le support (12, 14, 16) ne soit introduit dans le couvercle (25, 125).

5. Procédé selon au moins l'une quelconque des revendications précédentes, **caractérisé en ce que** le support (12, 14, 16), en particulier une plaque de base (14) du support (12, 14, 16), est relié de préférence solidement à un couvercle (25, 125) à l'état inséré dans le couvercle (25, 125).

6. Procédé selon au moins l'une quelconque des revendications précédentes, **caractérisé en ce que** le coussin de sécurité (10) est comprimé dans la douille (24) de préférence manuellement autour du piston avant l'introduction du support (12, 14, 16) dans la douille (24).

7. Procédé selon au moins l'une quelconque des revendications précédentes, **caractérisé en ce que**, avant l'introduction du support (12, 14, 16) dans la douille (24), le coussin de sécurité (10) est de préférence tassé manuellement dans la douille (24) et/ou on le laisse tomber de haut en bas dans la douille (24).

8. Procédé selon au moins l'une quelconque des revendications précédentes, **caractérisé en ce que** le piston (18) est déplacé en avant contre l'extrémité fermée (22) du coussin de sécurité (10) jusqu'à ce que soient tendus un ou plusieurs éléments de liaison de préférence en forme de bande (23) agencés à l'intérieur du coussin de sécurité (10), qui relient l'extrémité fermée (22) du coussin de sécurité (10) à son extrémité ouverte (11) ou au support (12, 14, 16).

9. Procédé selon au moins l'une quelconque des revendications précédentes, **caractérisé en ce que**, avant la compression du coussin de sécurité (10) à sa dimension de tassement finale, le piston (18) est déplacé dans une position finale au voisinage d'un élément de fond (26, 126) et, de préférence, assez près de l'élément de fond (26, 126) pour qu'une zone de l'extrémité fermée (22) du coussin de sécurité (10) soit pressée contre l'élément de fond (26, 126).

10. Procédé selon au moins l'une quelconque des revendications précédentes, **caractérisé en ce que**, après l'introduction du support (12, 14, 16) et du piston (18) dans la douille (124), au moins l'unité ainsi formée est déplacée dans son ensemble dans la direction d'un élément de fond (126) agencé fixe et, ensuite, le support (12, 14, 16) est déplacé par rapport à la douille (124) vers l'élément de fond (126).

11. Dispositif permettant de réaliser un procédé pour le pliage d'un coussin de sécurité gonflable pour véhicules automobiles selon au moins l'une quelconque des revendications précédentes, comprenant un support (12, 14, 16), sur lequel peut être fixé un coussin de sécurité à plier (10) par son extrémité ouverte (11), un piston de préférence sensiblement cylindrique (18), qui peut être déplacé en avant à travers une ouverture (20) ménagée dans le support (12, 14, 16) dans le coussin de sécurité (10) contre l'extrémité fermée (22) du coussin de sécurité (10), et une douille (24, 124), dans laquelle le support (12, 14, 16) et le piston (18) peuvent être introduits, **caractérisé en ce qu'**au moins une partie (14) du support (12, 14, 16) correspond en forme et en dimensions à la surface en section transversale interne libre de la douille (24, 124) et **en ce que**, pour comprimer irrégulièrement le coussin de sécurité (10) à sa dimension de tassement finale, le support (12, 14, 16), le piston (18), la douille (24, 124) et un élément de fond (26, 126) peuvent être déplacés l'un par rapport à l'autre de sorte qu'un espace délimité par ces éléments puisse être réduit.

12. Dispositif selon la revendication 11, **caractérisé en ce qu'**un élément porteur (12) du support est relié de manière amovible à un bloc d'un module de coussin de sécurité comprenant, de préférence, une plaque de base (14) et/ou un élément de retenue (16) de préférence annulaire, la plaque de base (14) correspondant de préférence en forme et en dimensions à la surface en coupe transversale interne libre de la douille (24, 124).

13. Dispositif selon la revendication 11 ou 12, **caractérisé en ce qu'**en dessous de la douille (24, 124) est agencé un couvercle (25, 125) pour le coussin de sécurité comprimé (10), le couvercle (25, 125) comprenant de préférence un élément de fond (26, 126) et une section de paroi (27, 127) reliée à l'élément de fond (26, 226).

14. Dispositif selon au moins l'une quelconque des revendications 11 à 13, **caractérisé en ce que** des éléments de flexion (32, 132) montés de préférence sur la douille (24, 124) peuvent être amenés entre la douille (24, 124) et une section de paroi (27, 127), de préférence déformable élastiquement, d'un couvercle (25, 125) pour le coussin de sécurité comprimé, les éléments de flexion (32, 132) pouvant être amenés pour l'insertion du support (12, 14, 16), en particulier d'un bloc comprenant une plaque de base (14) et/ou un élément de retenue de préférence annulaire (16), dans le couvercle (25, 125), dans une position d'insertion dans laquelle ils élargissent la section de paroi (27, 127) du couvercle (25, 125).

15. Dispositif selon au moins l'une quelconque des revendications 11 à 14, **caractérisé en ce que** la section transversale du support (12, 14, 16), en particulier d'une plaque de base (14) d'un module de coussin de sécurité, correspond en forme et en dimensions au moins sensiblement à la surface en coupe transversale interne libre de la douille (24, 124) et/ou d'un couvercle (25, 125) pour le coussin de sécurité comprimé (10), de préférence à celle du coussin de sécurité (10) comprimé en position finale.

16. Dispositif selon au moins l'une quelconque des revendications 11 à 15, **caractérisé en ce que** la section transversale du piston (18) correspond en forme et en dimensions au moins sensiblement à celle d'un générateur de gaz pour le coussin de sécurité (10).

17. Dispositif selon au moins l'une quelconque des revendications 11 à 16, **caractérisé en ce que** la douille (24) et un élément de fond (26) agencé de préférence en dessous de la douille (24) sont agencés fixes, le support (12, 14, 16) et le piston (18) pouvant être introduits dans la douille (24) et déplacés dans la direction de l'élément de fond (26).

18. Dispositif selon au moins l'une quelconque des revendications 11 à 17, **caractérisé en ce que** seul un élément de fond (126) est agencé fixe, le support (12, 14, 16) et le piston (18) pouvant être introduits dans la douille (124) et déplacés dans la direction de l'élément de fond (126) conjointement avec la douille (124).
